Europäisches Patentamt

European Patent Office

Office européen des brevets

(11) Numéro de publication: **0 001 598**
B1

## (12) FASCICULE DE BREVET EUROPEEN

(21) Numéro de dépôt: **78101086.3**

(22) Date de dépôt: **06.10.78**

(51) Int. Cl.³: **H 01 M 4/48, H 01 M 6/16**

(54) Générateur électrochimique à solvant aprotique comportant comme matière cathodique un dérivé d'oxyde de plomb divalent.

(30) Priorité: **14.10.77 FR 7730946**

(43) Date de publication de la demande:
**02.05.79 Bulletin 79/9**

(45) Mention de la délivrance du brevet:
**18.03.81 Bulletin 81/11**

(84) Etats Contractants Désignés:
**BE CH DE FR GB LU NL SE**

(56) Documents cités:
**FR - A - 2 124 388
FR - A - 2 169 748
FR - A - 2 308 209**

(73) Titulaire: **SAFT - SOCIETE DES ACCUMULATEURS FIXES ET DE TRACTION S.A. dite:
156, avenue de Metz
F-93230 Romainville (FR)**

(72) Inventeur: **Gabano, Jean-Paul
99, rue Condorcet
F-86000 Poitiers (FR)**
(72) Inventeur: **Broussely, Michel
36, rue de la Bugellerie
F-86000 Poitiers (FR)**

(74) Mandataire: **Weinmiller, Jürgen et al,
Zeppelinstrasse 63
D-8000 München 80 (DE)**

Courier Press, Leamington Spa, England.

Générateur électrochimique à solvant aprotique comportant comme matière cathodique un dérivé d'oxyde de plomb divalent

La présente invention concerne les générateurs électrochimiques de grande énergie spécifique ayant comme matière active négative le lithium et comportant un électrolyte dont le solvant est un composé aprotique. Elle a plus spécialement pour objet la matière active positive de ces générateurs.

Le brevet français n° 76 10 552 (publié sous le n° 2 308 209) a décrit une pile au lithium dont la matière active était constituée d'un oxyde de bismuth $Bi_2O_3$. On a renoncé à mettre en oeuvre cette matière active à cause de son coût.

Par ailleurs, le brevet français n° 74 34 867 (publié sous le numéro 2 288 401) et son certificat d'addition n° 75 20 497 (publié sous le numéro 2 316 756) ont décrit des piles au lithium dont la matière positive était constituée, entre autres, d'oxyde de plomb de formule $Pb_3O_4$, ou minium.

La Demanderesse a constaté que certains composés qui présentaient avec le minium l'analogie de résulter de la combinaison d'un oxyde à caractère anhydride d'acide avec l'oxyde de plomb PbO qui a, lui, des caractères basiques, donnaient des résultats au moins égaux à ceux du minium, lorsqu'ils étaient employés comme matières actives positives dans les générateurs au lithium.

L'invention a donc pour objet un générateur électrochimique dont la matière active négative est le lithium, l'électroyte une solution dont le solvant est un liquide aprotique et la matière active positive un dérivé de l'oxyde de plomb divalent PbO, caractérisé par le fait que ledit dérivé est une combinaison dudit oxyde de plomb avec un oxyde de bismuth $Bi_2O_3$.

Le bismuthate de plomb de formule $Pb_2Bi_2O_5$ a donné entre autres, d'excellents résultats. Cette matière active positive possède en outre sur le minium les avantages physiques suivants:

— sa poudre se moule parfaitement pour former des électrodes agglomérées, sans qu'il soit nécessaire d'y ajouter un liant comme dans le cas du minium.

— elle est beaucoup moins soluble dans le carbonate de propylène, entre autres, ce qui permet d'utiliser ce solvant d'electrolyte pour des piles qui doivent être conservées longtemps.

Les électrolytes qui peuvent être utilisés dans les piles selon l'invention sont des solutions dont le solvant peut être un éther ou un ester ou des mélanges d'éthers et d'esters. Parmi les éthers utilisables on peut citer le dioxolanne, le tétrahydrofuranne, le diméthoxyéthane ou leurs mélanges, et parmi les esters, le sulfite de diméthyle, le carbonate de propylène, le carbonate, d'éthylène, etc...

Le soluté est de préférence un sel de lithium, tel que le perchlorate, le tétrafluoborate, le fluorométhylsulfonate, l'hexafluoroarséniate.

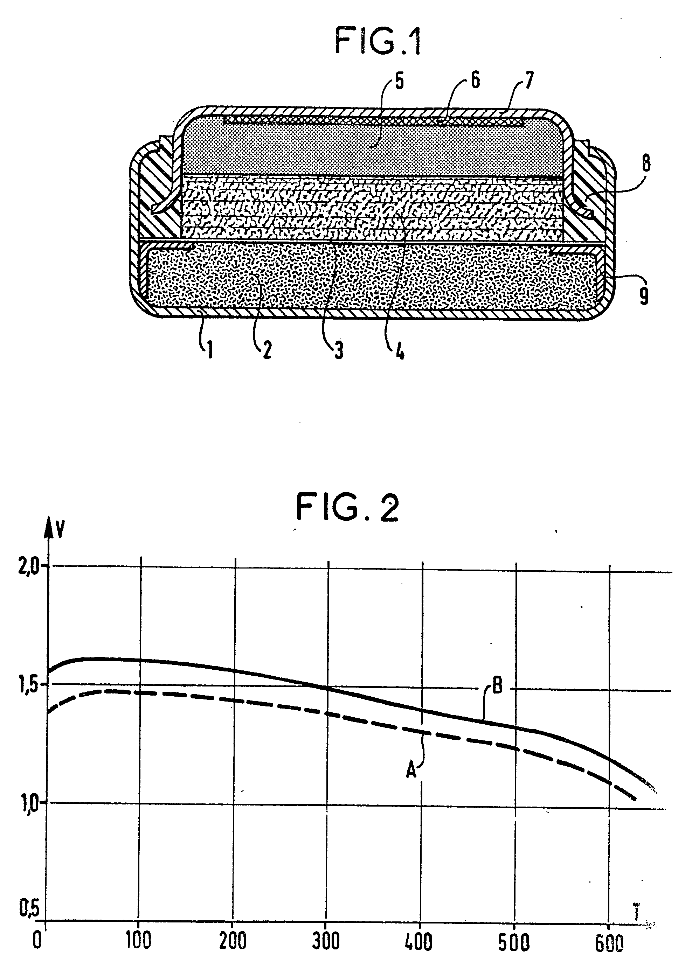

L'invention sera mieux comprise à l'aide des exemples suivants, illustrés par le dessin annexé dans lequel la figure 1 représente une coupe d'une structure de pile utilisable dans le cadre de l'invention et la figure 2 la décharge de deux piles, une pile de la technique antérieure et une pile selon l'invention.

On a préparé des piles de type bouton telles que celle représentée sur la figure 1, de diamètre extérieure 11,6 mm et de hauteur totale 5,4 mm.

Le boitier se compose de deux coupelles 1 et 7 en acier nickelé, ou acier inoxydable, séparées par un joint 8 en matière plastique, ou élastomère, qui sert à l'étanchéité et à l'isolement électrique des coupelles entre elles. La coupelle négative 7 contient le lithium qui est sous la forme d'une couche 5 incrustée sur un collecteur 6, constitué par une grille en acier nickelé, ou acier inoxydable, soudé à la coupelle. La coupelle positive 1 contient la matière active pulvérulente 2 qui est additionnée d'un conducteur électronique et, éventuellement, d'un liant. Cette masse active est comprimée dans la coupelle 1 qui peut comporter, ainsi que représenté, un anneau métallique 9 (en acier nickelé ou en acier inoxydable) qui sert à maintenir la matière active et à renforcer l'appui du joint 8 sur lequel est rabattue la coupelle 1.

Les matières actives positive et négative sont séparées par une barrière en papier 3 et des couches de feutre cellulosique 4 imbibées d'électrolyte.

1er exemple de réalisation, selon technique antérieure:

Une première série de piles à été montée sur le modèle décrit ci-dessus. La masse active positive se composait de minium pulvérulent auquel avaient été ajoutés du plomb pulvérulent et du polytétrafluoréthylène, les proportions respectives étant 73%, 23% et 4% en poids. L'ensemble de cette masse à été comprimé sous une pression de 1,5 tonne/cm² dans la coupelle positive, la quantité introduite donnant une épaisseur de 1,35 mm à la masse cathodique. La capacité théorique est 148 mAh.

L'electrolyte est constitué par une solution 2M de perchlorate de lithium dans du dioxolanne. Ces piles représentent les piles de la technique antérieure.

Ces piles ont été déchargées sur une résistance de 5 000 ohms. La courbe A de la figure 2 représente la courbe de décharge de ces piles, les tensions V, en volts, ayant été portées en ordonnées et les temps de décharge T, en heures, en abscisses. Si l'on prend 1,2v comme tension d'arrêt le temps de décharge est d'environ 550 heures, ce que correspond à une capacité effective de 145 mAh. Il faut cependant remarquer qu'aux tensions 1,3 à 1,2 volts il est très probable que le polytétrafluoréthylène participe à la décharge et qu'en conséquence le rendement est à attribuer à l'ensemble du minium et du polytétrafluoréthylène.

2ème exemple de réalisation, selon invention:

Une seconde série de piles semblables a été montée, mais avec une matière active positive selon la présente invention. Cette matière active se composait de bismuthate de plomb $Pb_2Bi_2O_5$. On y a ajouté du plomb pulvérulent comme conducteur électronique, mais l'addition de liant est rendue inutile par les qualités de compressibilité de la poudre de bismuthate. La masse est alors plus conductrice que le mélange de minium et de polytétrafluoréthylène et la quantité de plomb pulvérulent peut être abaissée à 10%.

La masse est donc à 90% en poids de bismuthate, et 10% de plomb métal. La compression s'effectue à 1 tonne/cm$^2$ pour obtenir la hauteur de 1,35 mm. La capacité théorique de la masse ainsi obtenue est 198 mAh.

La courbe B de la figure 2 représente la décharge des ces piles sur une résistance de 5 000 ohms. Comme on le voit, bien que de dimensions extérieures égales à celles du premier exemple de réalisation, les piles de cette série, utilisant la matière active positive selon l'invention, se déchargent à une tension supérieure (1,45 volt de tension moyenne, contre 1,37 pour la première série). Leur décharge dure 600 heures, ce qui correspond à une capacité de 175 mAh.

Bien entendu l'invention n'est nullement limitée aux modes de réalisations décrits et représentés, qui n'ont été donnés qu'à titre d'exemples.

## Revendications

1. Générateur électrochimique dont la matière active négative est le lithium, l'électrolyte une solution dont le solvant est un liquide aprotique et la matière active positive un dérivé de l'oxyde de plomb divalent PbO, caractérisé par le fait que ledit dérivé est une combinaison dudit oxyde de plomb avec un oxyde de bismuth $Bi_2O_3$.

2. Générateur électrochimique selon la revendication 1, caractérisé par le fait que la matière active positive est du bismuthate de plomb $Pb_2Bi_2O_5$.

3. Générateur électrochimique selon l'une des revendications 1 et 2, caractérisé par le fait que la matière active positive est additionnée d'un conducteur électronique.

4. Générateur électrochimique selon la revendication 3, caractérisé par le fait que le conducteur électronique est de la poudre de plomb.

5. Générateur électrochimique selon l'une des revendications précédentes, caractérisé par le fait que le solvant de l'électrolyte est choisi dans le groupe constitué par le dioxolanne, le tétrahydrofuranne, le diméthoxyéthane, le sulfite de diméthyle, le carbonate de propylène, le carbonate d'éthylène et leurs mélanges.

6. Générateur électrochimique selon l'une des revendications précédentes, caractérisé par le fait que le soluté de l'électrolyte est un sel de lithium choisi dans le groupe constitué par le perchlorate, le tétrafluoborate, le fluorométhylsulfonate, l'hexafluoroarséniate.

7. Générateur électrochimique selon l'une des revendications précédentes caractérisé par le fait que l'électrolyte est une solution de perchlorate de lithium à 2 moles/litre dans le dioxolanne.

## Patentansprüche

1. Elektrochemischer Generator, dessen negative aktive Masse Lithium ist, dessen Elektrolyt eine Lösung in einem aprotischen Lösungsmittel und dessen positive aktive Masse von zweiwertigem Bleioxid PbO abgeleitet ist, dadurch gekennzeichnet, daß die positive aktive Masse aus einer Kombination dieses Bleioxids mit einem Wismutoxid $Bi_2O_3$ besteht.

2. Elektrochemischer Generator nach Anspruch 1, dadurch gekennzeichnet, daß die positive aktive Masse aus Bleiwismutat $Pb_2Bi_2O_5$ be-steht.

3. Elektrochemischer Generator nach einem der Ansprüche 1 und 2, dadurch gekennzeichnet, daß der positiven aktiven Masse ein Elektronenleiter zugefügt ist.

4. Elektrochemischer Generator nach Anspruch 3, dadurch gekennzeichnet, daß der Elektronenleiter aus Bleipulver besteht.

5. Elektrochemischer Generator nach einem der vorstehenden Ansprüche, dadurch gekennzeichnet, daß das Elektrolytlösungsmittel aus der Gruppe von Stoffen ausgewählt ist, die Dioxolan, Tetrahydrofuran, Dimethoxyäthan, Di-methylsulfit, Propylenkarbonat, Äthylen-karbonat und Mischungen dieser Stoffe enthält.

6. Elektrochemischer Generator nach einem der vorstehenden Ansprüche, dadurch gekennzeichnet, daß der Elektrolytlöser ein Lithiumsalz aus der Gruppe ist, die aus dem Perchlorat, dem Tetrafluorborat, dem Fluor-methylsulfonat und dem Hexafluoroarseniat ge-bildet wird.

7. Electrochemischer Generator nach einem der vorstehenden Ansprüche, dadurch gekennzeichnet, daß der Elektrolyt eine Lösung von 2 Mol Lithiumperchlorat in einem Liter Di-oxolan ist.

## Claims

1. Electrochemical generator, having lithium as the negative active material, the electrolyte being a solution with an aprotic solvent and the positive active material being a derivative of divalent lead oxide PbO, characterized by the fact that said derivative is a combination of said lead oxide with a bismuth oxide $Bi_2O_3$.

2. Electrochemical generator according to claim 1, characterized by the fact that the positive active material is lead bismuthate $Pb_2Bi_2O_5$.

3. Electrochemical generator according to one of the claims 1 and 2, characterized by the fact that an electronic conductor is added to the positive active material.

4. Electrochemical generator according to claim 3, characterized by the fact that the electronic conductor is lead power.

5. Electrochemical generator according to one of the preceding claims, characterized by the fact that the electrolyte solvent is selected from the group consisting of dixolane, tetrahydrofuran, dimethoxyethane, dimethylsulfite, propylene carbonate, ethylene carbonate, and their mixtures.

6. Electrochemical generator according to one of the preceding claims, characterized by the fact that the electrolyte solute is a lithium salt selected from the group consisting of perchlorate, tetrafluoborate, fluoromethylsulfonate and hexafluoroarseniate.

7. Electrochemical generator according to one of the preceding claims, characterized by the fact that the electrolyte is a solution of 2 moles of lithium perchlorate in one liter of dioxolane.

# FIG.1

# FIG. 2